## Europäisches Patentamt

## European Patent Office

## Office européen des brevets

(19)

(11) Veröffentlichungsnummer: **0 110 328 B1**

(12) **EUROPÄISCHE PATENTSCHRIFT**

(45) Veröffentlichungstag der Patentschrift:
07.10.87

(51) Int. Cl.⁴: **C 04 B 38/10,** C 04 B 28/26

(21) Anmeldenummer: **83111771.8**

(22) Anmeldetag: **24.11.83**

(54) **Verfahren zur Herstellung von Wasserglasschaumstoffen aus Aerosoldosen.**

(30) Priorität: **02.12.82 DE 3244523**

(43) Veröffentlichungstag der Anmeldung:
**13.06.84 Patentblatt 84/24**

(45) Bekanntmachung des Hinweises auf die Patenterteilung:
**07.10.87 Patentblatt 87/41**

(84) Benannte Vertragsstaaten:
**DE**

(56) Entgegenhaltungen:
**DE - A - 2 165 912**
**DE - A - 2 233 234**
**DE - A - 2 644 780**
**DE - B - 1 617 825**
**FR - A - 1 431 181**
**FR - A - 2 219 130**
**FR - A - 2 221 189**
**GB - A - 1 231 889**
**US - A - 3 725 095**
**US - A - 3 970 219**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Kluth, Hermann, Degerstrasse 48, D-4000 Düsseldorf (DE)**
Erfinder: **Röderhoff, Bernhard, Am Zunder 12, D-4000 Düsseldorf 13 (DE)**
Erfinder: **Friedemann, Wolfgang, Dr., Stephanusstrasse 14, D-4040 Neuss 23 (DE)**
Erfinder: **Wegner, Jürgen, Dr., Siegfriedstrasse 21, D-4000 Düsseldorf 11 (DE)**
Erfinder: **Dierichs, Wolfgang, Dr., im Diepental 11, D-4000 Düsseldorf 13 (DE)**

## Beschreibung

Die Erfindung betrifft ein Verfahren zur Herstellung von Schäumen auf der Basis von Alkalimetallsilikaten durch Mischen der ursprünglich in zwei getrennten Druckbehältern vorliegenden, den Schaum bildenden Komponenten und Austreiben des Wasserglasschaums mit Hilfe eines bei Raumtemperatur unter Druck verflüssigten Treibgases.

In der Patentliteratur werden eine Reihe von Verfahren sowie verschiedene Treibmittel und diverse Härtungssysteme zur Herstellung von Wasserglasschäumen beschrieben. Hierbei sind zwei grundsätzlich verschiedene Verfahrensgänge zu unterscheiden: Einerseits die chemische Schäumung, bei der das Treibmittel z.B. durch die Zersetzung von Peroxiden, bevorzugt $H_2O_2$, durch Metallpulver oder andere Reduktionsmittel (DE-OS 2 227 640) oder durch die Zersetzung von Carbiden in wässriger Lösung (DE-OS 2 226 841) gebildet wird; andererseits die physikalische Schäumung, bei der die Schaumbildung durch Einblasen von Gasen, z.B. Luft (DE-OS 2 039 736), oder Erhitzung (DE-OS 2 948 778) erfolgt.

Beide Verfahrensgänge erfordern aufwendige Maschinen für die Dosierung und Durchmischung mehrerer Komponenten (Wasserglaslösung, Härter, Treibmittel). Sie eignen sich zwar zur Herstellung von Erzeugnissen aus Silikatschäumen im industriellen Massstab, sind jedoch zur einfachen Erzeugung von Silikatschäumen vor Ort, d.h. z.B. im Bauwesen auf der Baustelle, wenig geeignet. Gerade hier wären jedoch Silikatschäume wegen ihrer unbestrittenen Vorteile gegenüber organischen Polymermaterialien (bessere Temperaturbeständigkeit ohne Abgabe von giftigen Gasen oder Rauch, Unbrennbarkeit, bessere Verarbeitbarkeit bei gleichen Isolations- und Konstruktionseigenschaften) vorteilhaft einsetzbar. Insbesondere ist eine Methode zur einfachen Erzeugung von Ortsschäumen bisher nicht bekannt.

Die vorliegende Erfindung schafft hier Abhilfe.

Demgemäss bezieht sie sich auf ein Verfahren zur Erzeugung von Schäumen auf der Basis von Alkalimetallsilikaten, das dadurch gekennzeichnet ist, dass eine wässrige Alkalisilikatlösung einerseits und eine Härterlösung andererseits in separaten Druckbehältern A und B vorliegen, die Härterlösung in Behälter B durch Betätigen eines Ventils der Silikatlösung in Behälter A zugeführt und mit ihr vermischt wird und zur Schaumerzeugung bei Betätigen des Entnahmeventils ein unter erhöhtem Druck im Bereich von 0 bis 50 °C flüssiges Treibgas in Kombination mit einem geeigneten Emulgator verwendet wird.

Der erfindungsgemässe Gedanke besteht darin, ein zwischen 0 und 50 °C, bevorzugt bei Raumtemperatur, unter Druck verflüssigtes Gas in einer wässrigen Wasserglaslösung in einem Aerosolbehälter A zum emulgieren und zur Auslösung der Härtung die Härterkomponente, die in einem gesonderten Behälter B enthalten ist, durch Überdruck in den Behälter A zu drücken.

Als Behälter B kann ebenfalls eine Aerosoldose oder aber ein spezieller Kunststoffbehälter dienen; er kann ferner entsprechend der EP-A 0 042 128 als Innenbehälter in der Aerosoldose A untergebracht sein. Hierbei wird der Härter durch Eindrehen einer Spindel oder Betätigen eines speziellen Ventils in den Behälter A überführt. Nachdem durch Schütteln des gesamten Gebindes Wasserglaslösung, Treibmittel und Härter emulgiert sind, wird durch Betätigen des Aerosolventils die physikalische Verschäumung durch Verdampfen des als Treibmittel fungierenden verflüssigten Gases eingeleitet. Gleichzeitig führt die verzögert einsetzende Härtung zu einer Verfestigung des Schaumgerüstes. Durch physikalische Abbindung (Wasserabgabe) erlangt der Schaum seine Endfestigkeit.

Für die Herstellung der Wasserglasschäume werden vorzugsweise Natriumsilikat- und/oder Kaliumsilikatlösungen verwendet.

In dem erfindungsgemässen Verfahren werden Alkalisilikatlösungen eingesetzt, in denen das Molverhältnis $SiO_2/Na_2O$ 2 bis 4:1, vorzugsweise 2,5 bis 3,5:1, bzw. das Molverhältnis $SiO_2/K_2O$ 2,8 bis 4:1, vorzugsweise 3,2 bis 3,5:1 beträgt. Dabei beträgt der Gesamtfeststoffgehalt der Lösung 27 bis 50 Gew.-%, so dass die Lösung bei 20 °C eine Dichte von 1,25 bis 1,60 $g/cm^3$ sowie eine Viskosität von 10 bis 5000 mPa · s vorzugsweise von 50 bis 1000 mPa · s aufweist. Zur Verbesserung der mechanischen Festigkeit der gebildeten Schäume können den Alkalisilikatlösungen ggfls. quaternäre Ammoniumverbindungen, Borate und/oder Kunstharze sowie alkaliverträgliche organische und/oder anorganische Verbindungen zugesetzt werden. Bevorzugt werden im Handel erhältliche Kunstharzdispersionen, wie z.B. Styrol-Acrylsäureester-Dispersionen, Styrol-Butadien-Dispersionen oder Vinylacetat enthaltende Polymere.

Erfindungsgemäss verwendbare Härter können sowohl organischer als auch anorganischer, flüssiger bzw. gasförmiger Natur sein. Zu den verwendbaren organischen Härtern zählen insbesondere unter Einwirkung von Alkali säureabspaltende Ester wie z.B. Glyzerintriacetat. Auch die Dimethylester der Oxalsäure, Bernsteinsäure, Glutarsäure und Adipinsäure sind als Härter verwendbar, ergeben jedoch Wasserglasschäume geringerer Festigkeit. Im Gemisch mit Glyzerintriacetat können sie zur Regulierung der Topfzeit, d.h. der Zeitspanne von der Zugabe des Härters zur Silikatlösung bis zur Verhärtung, eingesetzt werden. Zusätzlich können den Carbonsäureestern Oxide oder Salze mehrwertiger Kationen, z.B. Zink, Magnesium oder Calcium zugemischt werden; beispielsweise wird Zinkoxid verwendet.

Grundsätzlich ist es auch möglich, die Härterkomponente in mikroverkapselter Form in die Alkalisilikatlösung einzubringen. Alkalilösliche bzw. im Treibmittel lösliche Mikrokapseln gewährleisten eine Freisetzung der Härterkomponente bei erfindungsgemässer Verwendung.

In der bevorzugten Ausführungsform der vorliegenden Erfindung ist jedoch die Härterkomponente in einem der beiden Druckbehälter, z.B. einer Aerosoldose, enthalten. Das Zusetzen zur Alkalisilikatlösung erfolgt mit einem bei über 0 °C, bevorzugt bei Raumtemperatur gasförmigen Treibmittel bzw. Treibmittelgemisch, beispielsweise Stickstoff oder Kohlendioxid. Zusätzlich kann diese Härter-/Treibmittel-Kombination mit einem bei 0 °C bis 50 °C, bevorzugt bei Raumtemperatur unter erhöhtem Druck verflüssigten Treibmittel gemischt werden.

Zum Ausbringen der Alkalisilikat-Härter-Mischung aus dem Druckbehälter A bei der erfindungsgemässen Verwendung der Wasserglasschäume wird ebenfalls ein Treibmittel eingesetzt. Dieses muss hydrolyse- und alkalibeständig sein. Es können dazu allgemein übliche Treibmittel, z.B. Dichloridfluormethan, Dimethylether, Propan-Butan sowie ggfls. Zusätze weiterer Treibmittel, z.B. Trichlorfluormethan, verwendet werden.

Für die erfindungsgemässe Ausführung des Verfahrens ist es besonders wichtig, das Treibmittel und den Härter in der wässrigen Phase gleichmässig zu verteilen bzw. zu emulgieren. Hierfür müssen dem Wasserglas-Treibmittel-Härter-Gemisch spezielle Emulgatoren zugesetzt werden. Geeignet sind solche Emulgatoren, die alkalistabil sind und beim Vermischen mit Wasserglas keine Viskositätserhöhung desselben bzw. keine Ausfällungen im Wasserglas (Gelbildung) bewirken. Beim Schütteln der Aerosoldose, bei dem die Wasserglaslösung mit den anderen Komponenten vermischt wird, soll eine Emulsion gebildet werden. Dabei darf kein Eindicken erfolgen. Die zur Schaumerzeugung notwendigen Emulgatoren können gemäss der Erfindung in Druckbehälter A und/oder in Druckbehälter B enthalten sein. Voraussetzung dafür ist, dass sie mit der Alkalisilikatlösung, dem Härter und dem Treibgas verträglich sind und keine Ausfällung im Alkalisilikat-System verursachen.

Als Emulgatoren werden an sich bekannte, nichtionogene, anionaktive, kationaktive und/oder amphotere Tenside eingesetzt. Bevorzugt verwendete Emulgatoren sind Addukte von Fettalkoholen an Ethylenoxid, z.B. von Oleyl-Cetyl-Alkohol an 2 bis 5 Mol Ethylenoxid, Ammoniumsalze mit einem oder zwei linearen Alkylresten mit 12 bis 17 C-Atomen wie Distearyldimethylammoniumchlorid oder Lauryltrimethylammoniumchlorid, sowie Monoester der Sulfobernsteinsäure mit Talgfettsäuremonomethanolamid.

Die nach dem erfindungsgemässen Verfahren erhaltenen Silikatschaumstoffe zeichnen sich nach Erhärten durch eine hohe Thermostabilität (bis 300 °C) aus. Nach DIN 4102 sind sie in die Baustoffklasse A 2 (nichtbrennbare Baustoffe) einzuordnen. Die Wärmeleitfähigkeit verschiedener bei Raumtemperatur ausgehärteter, lufttrockener Silikatschaumstoffe betrug je nach Schaumrohdichte und Feuchtigkeitsgehalt 0,043 bis 0,068 w/m · K.

Das erfindungsgemässe Verfahren wird durch die nachfolgenden Beispiele erläutert.

A. Beschreibung des Verfahrens

Wasserglaslösung, Emulgator, Treibmittel und ggfls. weitere erfindungsgemässe Zusätze wurden in eine Aerosoldose eingefüllt und ergaben die Komponente A.

In eine zweite Aerosoldose wurde der Härter und ggfls. erfindungsgemässe Zusätze eingefüllt und mit Stickstoff auf einen Druck von ca 10 bar eingestellt (Komponente B).

Nach Injektion der Härterkomponente B in die Komponente A wurde ca 1 min. von Hand geschüttelt und das Reaktionsgemisch so homogenisiert. Unmittelbar nach dem Schütteln bis zur gerade einsetzenden Härtung (Topfzeit) konnte das Reaktionsgemisch über einen Ventilhebel aus der Aerosoldose ausgeschäumt werden.

Die Zusammensetzung der erfindungsgemässen Komponentenmischungen sowie die erhaltenen Topfzeiten und Rohdichten lassen sich den nachfolgenden Beispielen entnehmen.

Folgende Emulgatoren wurden in dem erfindungsgemässen Verfahren eingesetzt:

| | |
|---|---|
| Emulgin O 2 | Oleyl-Cetylalkohol + 2 Mol EO |
| Emulgin O 5 | Oleyl-Cetylalkohol + 5 Mol EO |
| Elfanol 510 | Sulfobernsteinsäuremonoester + Talgfettsäuremonoethanolamid |
| Dehyquart C | Laurylpyridiniumchlorid |
| Dehyquart DAM | Distearyldimethylammoniumchlorid |
| Dehyquart LT | Lauryltrimethylammoniumchlorid. |

B. Beurteilungskriterien

1. Schaumbildung

Bildete sich bei der Produktentnahme aus der Aerosoldose kein oder nur wenig Schaum, wurde die Schaumbildung mit «–» bewertet, bei befriedigender bis sehr guter Schaumbildung wurde mit «+» bewertet.

2. Schaumstabilität

Der Begriff Schaumstabilität kennzeichnet das mögliche Zerfallen des frischen, unausgehärteten Schaumes. Sie ist als die Zeitspanne definiert, innerhalb der kein merkliches Zerfallen des Schaumes beobachtet werden konnte (d.h. $\leq$ 10% Volumenabnahme).

| Schaumstabilität | Bewertung |
|---|---|
| < 5 Minuten | – |
| > 5 < 15 Minuten | + |
| > 15 < 30 Minuten | + + |
| > 30 Minuten | + + + |

3. Schaumstruktur

Die Schaumstruktur nach Erhärtung und Trocknung des Schaumes (ca. 3 Tage bei 25 $\pm$ 5 °C) wurde visuell beurteilt. Mit «+» wurde eine feinzellige Schaumstruktur, mit «o» eine gröbere und/oder ungleichmässige, mit «–» eine sehr grobzellige und für technische Zwecke unbrauchbare Schaumstruktur gekennzeichnet.

C. Beispiele

Die Zusammensetzung der einzelnen Komponenten in den nachfolgenden Tabellen wird in g angegeben.

| Beispiel | 1 | 2[a] | 3 | 4 | 5 | 6 |
|---|---|---|---|---|---|---|
| Komponente A | | | | | | |
| Natriumwasserglaslösung | | | | | | |
| 37/40 | 400,0 | 425,0 | 482,5 | 472,5 | 477,5 | 422,5 |
| Emulgin 02 | | 2,5 | | | | |
| Emulgin 05 | 5,0 | 5,0 | 2,5 | 2,5 | 2,5 | 2,5 |
| Dichlordifluormethan | 95,0 | 57,5 | 15,0 | 25,0 | 50,0 | 75,0 |
| Komponente B | | | | | | |
| Glyzerintriacetat | 30,0 | 32,0 | 36,0 | 35,0 | 33,0 | 32,0 |
| Stickstoff | 1,2 | 1,2 | 1,2 | 1,2 | 1,2 | 1,2 |
| Kohlendioxid | – | – | – | – | – | – |
| Topfzeit bei 20 °C, Min. | 30 | 30 | 25 | 25 | 25 | 30 |
| Rohdichte des lufttrockenen Schaums (kg / m³) | 52 | 50–60 | 154 | 131 | 62 | 47 |

a) Komponente A enthält zusätzlich 10,0 g wässerige Acrylharzlösung (Plexitex®)

| Beispiel | 7 | 8 | 9 | 10 | 11 | 12 |
|---|---|---|---|---|---|---|
| Komponente A | | | | | | |
| Natriumwasserglaslösung | | | | | | |
| 37/40 | 397,5 | 347,5 | 249,5 | 400 | 400 | 400 |
| Emulgin 02 | | | | | | |
| Emulgin 05 | 2,5 | 2,5 | 2,0 | 10 | 10 | 10 |
| Dichlordifluormethan | 100,0 | 150,0 | 249,0 | 90 | 90 | 90 |
| Komponente B | | | | | | |
| Glyzerintriacetat | 30,0 | 26,0 | 18,7 | 30 | 30 | 30 |
| Stickstoff | 1,2 | 1,2 | 1,2 | 1,2 | 1,0 | |
| Kohlendioxid | – | – | – | – | 1,2 | 1,2 |
| Topfzeit bei 20 °C, Min. | 30 | 30 | 30 | ca 30 | ca 25 | ca 20 |
| Rohdichte des lufttrocke-nen Schaums (kg / m³) | 52 | 75 | 93 | 48–50 | 51–74 | 46–89 |

| Beispiel | | 13 | 14 | 15 | 16 | 17 |
|---|---|---|---|---|---|---|
| Komponente A | | | | | | |
| Natriumwasserglaslösung 50/52 | | 400 | 400 | 400 | – | – |
| dto. 48/50 (HF) | | – | – | – | 400 | 400 |
| dto. 37/40 | | – | – | – | – | – |
| Emulgin 02 | | | | | | |
| Emulgin 05 | | 10 | 10 | 10 | 10 | 10 |
| Dichlordifluormethan | | 90 | 90 | 90 | 90 | 90 |
| a)[1] | | | | | | |
| b)[2] | | | | | | |
| c)[3] | | | | | | |
| Komponente B | | | | | | |
| Glycerintriacetat | | 30 | 26,6 | 23,8 | 26,6 | 23,8 |
| Oxalsäuredimethylester | | – | 3,4 | 6,2 | 3,4 | 6,2 |
| Zinkoxid | | | | | | |
| Stickstoff | | 1,2 | 1,2 | 1,2 | 1,2 | 1,2 |
| Topfzeit bei 20 °C, Min. | | (> 24 h) | 420 | 300 | 180 | 90 |
| Rohdichte des lufttrockenen Schaums, (kg / m³) | | – | 55 | 63 | 280 | 40 |

[1] Acronal 290 D®(Styrol-Acrylsäureester-Dispersion)
[2] Synthomer 6210® (Styrol-Butadien-Dispersion)
[3] Vinnapas LL-521-1® (Vinylacetat-Copolymer-Dispersion)

| Beispiel | 18 | 19 a/b | 20 | 21 | 22 |
|---|---|---|---|---|---|
| **Komponente A** | | | | | |
| Natriumwasserglaslösung 50/52 | – | – | – | – | – |
| dto. 48/50 (HF) | 400 | | | | |
| dto. 37/40 | – | 390/390 | 390 | 390 | 400 |
| Emulgin 02 | | | | | 5 |
| Emulgin 05 | 10 | 10/10 | 10 | 10 | 5 |
| Dichlordifluormethan | 90 | 90/90 | 90 | 90 | 90 |
| a)[1] | | 10/20 | | | |
| b)[2] | | | 10 | | |
| c)[3] | | | | 10 | |
| **Komponente B** | | | | | |
| Glycerintriacetat | 21,6 | 29/28 | 29 | 29 | 30 |
| Oxalsäuredimethylester | 8,4 | | | | |
| Zinkoxid | | | | | 4 |
| Stickstoff | 1,2 | 1,2/1,2 | 1,2 | 1,2 | 1,2 |
| Topfzeit bei 20 °C, Min. | 10 | 35/35 | 30 | 35 | 25 |
| Rohdichte des lufttrockenen Schaums, (kg / m³) | 40 | 130/130 | 122 | 130 | 56 |

[1] Acronal 290 D® (Styrol-Acrylsäureester-Dispersion)
[2] Synthomer 6210® (Styrol-Butadien-Dispersion)
[3] Vinnapas LL-521-1® (Vinylacetat-Copolymer-Dispersion)

| Beispiel | 23 | 24 | 25 | 26 | 27 | 28 |
|---|---|---|---|---|---|---|
| **Komponente A** | | | | | | |
| Natriumwasserglaslösung 37/40 | 200 | 200 | 200 | 200 | 200 | 200 |
| Emulgin 02 | 5,0 | | | | | |
| Emulgin 05 | | 2,0 | 5,0 | 5,0 | 5,0 | 5,0 |
| Dichlordifluormethan | 50 | 50 | 10 | 15 | 20 | 25 |
| a)[1] | | | | | | |
| b)[2] | | | | | | |
| c)[3] | | | | | | |
| d)[4] | | | | | | |
| e)[5] | | | | | | |
| **Komponente B** | | | | | | |
| Glycerintriacetat | 15,0 | 15,0 | 15,0 | 15,0 | 15,0 | 15,0 |
| Stickstoff | (f) | (f) | (f) | (f) | (f) | (f) |
| Topfzeit bei 25 °C, Min. | 20 | 20 | 20 | 20 | 20 | 20 |
| Rohdichte des lufttrockenen Schaums (kg / m³) | 55 | 52 | 130 | 93 | 72 | 52 |

[1] Chlorparaffin 40
[2] Glycerin
[3] Ethylenglykol
[4] Acronal 290D® (Styrol-Acrylat-Dispersion)
[5] Plexitex® (Acrylharzlösung)
(f) Einstellung des Stickstoffdrucks im Behälter B auf 10 bar

| Beispiel | 29 | 30 | 31 | 32 | 33 | 34 |
|---|---|---|---|---|---|---|
| **Komponente A** | | | | | | |
| Natriumwasserglaslösung | | | | | | |
| 37/40 | 200 | 200 | 200 | 200 | 200 | 200 |
| Emulgin 02 | | | | | 1,2 | 1,2 |
| Emulgin 05 | 5,0 | 5,0 | 5,0 | 5,0 | 2,4 | 2,4 |
| Dichlordifluormethan | 30 | 35 | 40 | 50 | 50 | 50 |
| a)[1] | | | | | | 5,0 |
| b)[2] | | | | | | |
| c)[3] | | | | | | |
| d)[4] | | | | | | |
| e)[5] | | | | | | |
| **Komponente B** | | | | | | |
| Glycerintriacetat | 15,0 | 15,0 | 15,0 | 15,0 | 15,0 | 15,0 |
| Stickstoff | (f) | (f) | (f) | (f) | (f) | (f) |
| Topfzeit bei 25 °C, Min. | 20 | 20 | 20 | 20 | 25 | 25 |
| Rohdichte des lufttrockenen Schaums (kg/m³) | 55 | 46 | 51 | 52 | 50 | 55 |
| Bemerkungen: | | | | | [6] | [7] |

[1] Chlorparaffin 40
[2] Glycerin
[3] Ethylenglykol
[4] Acronal 290D® (Styrol-Acrylat-Dispersion)
[5] Plexitex® (Acrylharzlösung)
(f) Einstellung des Stickstoffdruckes im Behälter B auf 10 bar
[6] verbesserte Standfestigkeit in vertikalen Fugen
[7] geringere Wasseraufnahme

| Beispiel | 35 | 36 | 37 | 38 |
|---|---|---|---|---|
| **Komponente A** | | | | |
| Natriumwasserglaslösung 37/40 | 200 | 200 | 200 | 200 |
| Emulgin 02 | 1,2 | 1,2 | 1,2 | 1,2 |
| Emulgin 05 | 2,4 | 2,4 | 2,4 | 2,4 |
| Dichlordifluormethan | 50 | 50 | 50 | 50 |
| a)[1] | | | | |
| b)[2] | 5,0 | | | |
| c)[3] | | 5,0 | | |
| d)[4] | | | 5,0 | |
| e)[5] | | | | 5,0 |
| **Komponente B** | | | | |
| Glycerintriacetat | 15,0 | 15,0 | 15,0 | 15,0 |
| Stickstoff | (f) | (f) | (f) | (f) |
| Topfzeit bei 25 °C, Min. | 15 | 10 | 25 | 24 |
| Rohdichte des lufttrockenen Schaums (kg/m³) | ca. 70 | ca. 90 | ca. 80 | ca. 50 |
| Bemerkungen: | höhere Festigkeit | | verbessertes Fliessverhalten | |

[1] Chlorparaffin 40
[2] Glycerin
[3] Ethylenglykol
[4] Acronal 290D® (Styrol-Acrylat-Dispersion)
[5] Plexitex® (Acrylharzlösung)
(f) Einstellung des Stickstoffdrucks im Behälter B auf 10 bar

| Beispiel | 39 | 40 | 41 | 42 | 43 | 44 |
|---|---|---|---|---|---|---|
| Komponente A | | | | | | |
| Wasserglas (Typbezeichnung) | HK30 | 37/40PE | 40/42 | 43/45 | 47/48 | 48/50 |
| Wasserglas (Einsatzmenge) | 200 | 200 | 200 | 200 | 200 | 200 |
| Im Wasserglas enth. Alkalimetall | Na | Na | Na | Na | Na | Na |
| Emulgin 05 | 5,0 | 5,0 | 5,0 | 5,0 | 5,0 | 5,0 |
| Dichlordifluormethan | 50 | 50 | 50 | 50 | 50 | 50 |
| Komponente B | | | | | | |
| Glycerintriacetat | 15,0 | 15,0 | 15,0 | 15,0 | 15,0 | 15,0 |
| Stickstoff | (a) | (a) | (a) | (a) | (a) | (a) |
| Topfzeit bei RT, Min. | 20 | 40 | 30 | 45 | > 60 | > 60 |
| Rohdichte des lufttrockenen Schaums (kg/m³) | ca. 50 | ca. 120 | ca. 80 | ca. 120 | ca. 180 | ca. 230 |

(a) Einstellung des Stickstoffdrucks im Behälter B auf 10 bar

| Beispiel | 45 | 46 | 47 | 48 | 49 |
|---|---|---|---|---|---|
| Komponente A | | | | | |
| Wasserglas (Typbezeichnung) | 50/52 | 28/30 | 35 | 40/41 | Mörsi1H |
| Wasserglas (Einsatzmenge) | 200 | 200 | 200 | 200 | 200 |
| Im Wasserglas enth. Alkalimetall | Na | K | K | K | K |
| Emulgin 05 | 5,0 | 5,0 | 5,0 | 5,0 | 5,0 |
| Dichlordifluormethan | 50 | 50 | 50 | 50 | 50 |
| Komponente B | | | | | |
| Glycerintriacetat | 15,0 | 15,0 | 15,0 | 15,0 | 15,0 |
| Stickstoff | (a) | (a) | (a) | (a) | (a) |
| Topfzeit bei RT, Min. | > 60 | 15 | 15 | 10 | 45 |
| Rohdichte des lufttrockenen Schaums (kg/m³) | > 500 | ca. 50 | ca. 50 | ca. 160 | ca. 200 |

(a) Einstellung des Stickstoffdrucks im Behälter B auf 10 bar

| Beispiel | 50 | 51 | 52 | 53 | 54 |
|---|---|---|---|---|---|
| Komponente A | | | | | |
| Natriumwasserglas 37/40 | 200 | 200 | 200 | 200 | 200 |
| Emulgin 05 | 0,1 | 0,2 | 0,5 | 1,0 | 2,0 |
| Dichlordifluormethan | 30 | 30 | 30 | 30 | 30 |
| Komponente B | | | | | |
| Glycerintriacetat | 15 | 15 | 15 | 15 | 15 |
| Stickstoff | (a) | (a) | (a) | (a) | (a) |
| Rohdichte des lufttrockenen Schaums (kg/m³) | — | 85 | 82 | 79 | 72 |
| Schaumbildung | — | + | + | + | + |
| Schaumstruktur | — | 0 | + | + | + |

(a) Einstellung des Stickstoffdrucks in Behälter B auf 10 bar

| Beispiel | 55 | 56 | 57 | 58 |
|---|---|---|---|---|
| Komponente A | | | | |
| Natriumwasserglas 37/40 | 200 | 200 | 200 | 200 |
| Emulgin 05 | 3,0 | 4,0 | 5,0 | 10,0 |
| Dichlordifluormethan | 30 | 30 | 30 | 30 |
| Komponente B | | | | |
| Glycerintriacetat | 15 | 15 | 15 | 15 |
| Stickstoff | (a) | (a) | (a) | (a) |
| Rohdichte des lufttrockenen Schaums (kg/m³) | 56 | 53 | 49 | 55(b) |
| Schaumbildung | + | + | + | + |
| Schaumstruktur | + | + | + | + |

(a) Einstellung des Stickstoffdrucks in Behälter B auf 10 bar
(b) starker Festigkeitsabfall des Schaums, wird bröselig

Beispiele 59–64

| Komponente A | |
|---|---|
| 200,0 g | Na-Wasserglaslösung 37/40 |
| 5,0 g | Emulgator (Lieferform) |
| 50,0 g | Dichlordifluormethan bzw. |
| 200,0 g | Na-Wasserglaslösung 37/40 |
| 5,0 g | Emulgator (Lieferform) |
| 20,0 g | Propan (Butan 35/65) |
| Komponente B | |
| 15,0 g | Glycerintriacetat |
| 1,2 g | Stickstoff |

| Beispiel | 59 | 60 | 61 |
|---|---|---|---|
| Emulgator | Emulgin 02 | Emulgin 05 | Elfanol 510 |
| Lieferform | flüssig | flüssig | pastös |
| Treibmittel $CCl_2F_2$: | | | |
| Schaumbildg. | + | + | + |
| Schaumstabil. | + + + | + + + | + + + |
| Schaumstrukt. | + | + | − |
| Treibmittel Propan/Butan | | | |
| Schaumbildg. | + | + | + |
| Schaumstabil. | + + + | + | + + |
| Schaumstrukt. | + | + | + |

| Beispiel | 62 | 63 | 64 |
|---|---|---|---|
| Emulgator | Dehyquart C | Dehyquart DAM | Dehyquart LT |
| Lieferform | pastös | pastös | flüssig |
| Treibmittel $CCl_2F_2$ | | | |
| Schaumbildung | − | + | + |
| Schaumstabil. | | + | + + |
| Schaumstruktur | | − | + |
| Treibmittel Propan/Butan | | | |
| Schaumbildung | + | + | + |
| Schaumstabil. | + + | + | + + |
| Schaumstruktur | − | − | + |

**Patentansprüche**

1. Verfahren zur Erzeugung von Ortsschäumen auf der Basis von Alkalimetallsilikaten, dadurch gekennzeichnet, dass eine wässrige Alkalisilikatlösung einerseits und eine Härterlösung andererseits in separaten Druckbehältern A und B vorliegen, die Härterlösung in Behälter B durch Betätigen eines Ventils der Silikatlösung in Behälter A zugesetzt und mit ihr vermischt wird, und zur Schaumerzeugung bei Betätigen des Entnahmeventils ein unter erhöhtem Druck im Bereich von 0 bis 50 °C flüssiges Treibgas in Kombination mit einem geeigneten Emulgator verwendet wird.

2. Verfahren nach Anspruch 1, dadurch gekennzeichnet, dass in einem Druckbehälter A eine flüssige Wasserglaslösung oder ein Gemisch von 50 bis 97 Gew.-%, vorzugsweise 80 bis 95 Gew.-%, wässriger Alkalisilikatlösung und 50 bis 3 Gew.-%, vorzugsweise 5 bis 20 Gew.-%, verflüssigtes Treibmittel enthalten ist.

3. Verfahren nach Ansprüchen 1 und 2, dadurch gekennzeichnet, dass als Alkalisilikatlösung vorzugsweise Natriumsilikat- und/oder Kaliumsilikatlösungen verwendet werden.

4. Verfahren nach Ansprüchen 1–3, dadurch gekennzeichnet, dass in der Alkalisilikatlösung das Molverhältnis von $SiO_2/Na_2O$ 2 bis 4:1, vorzugsweise 2,5 bis 3,5:1 bzw. das Molverhältnis $SiO_2/K_2O$ 2,8 bis 4:1, vorzugsweise 3,2 bis 3,5:1 beträgt.

5. Verfahren nach Ansprüchen 1–4, dadurch gekennzeichnet, dass der Gesamtfeststoffgehalt der Alkalisilikatlösung 25 bis 50 Gew.-% beträgt und die Lösung bei 20 °C eine Dichte von 1,25 bis 1,60 g/cm³ sowie eine Viskosität von 10 bis 5000 mPa·s, vorzugsweise 50 bis 1000 mPa·s aufweist.

6. Verfahren nach Ansprüchen 1–5, dadurch gekennzeichnet, dass die Alkalisilikatlösung ggfls. Zusätze an quaternären Ammoniumverbindungen, Boraten und/oder Kunstharzen sowie alkaliverträgliche organische und/oder anorganische Verbindungen zur Verbesserung der mechanischen Festigkeit der Schäume gelöst, emulgiert und/oder dispergiert enthält.

7. Verfahren nach Anspruch 1, dadurch gekennzeichnet, dass die Härterkomponente im Druckbehälter B bei Überdruck gegenüber dem Behälter A enthalten ist.

8. Verfahren nach Ansprüchen 1 und 7, dadurch gekennzeichnet, dass als Härter an sich übliche anorganische und/oder organische Gelierungsmittel verwendet werden.

9. Verfahren nach Ansprüchen 1, 7 und 8, dadurch gekennzeichnet, dass als Härter vorzugsweise Carbonsäureester, insbesondere Glycerintriessigsäureester eingesetzt werden.

10. Verfahren nach Ansprüchen 1, 7 und 8, dadurch gekennzeichnet, dass Gemische von Carbonsäureestern, vorzugsweise Glycerintriessigsäureester, mit Oxiden oder Salzen mehrwertiger Kationen, vorzugsweise Zn, Mg, Ca, verwendet werden.

11. Verfahren nach Ansprüchen 1 und 7–10, dadurch gekennzeichnet, dass anorganische bzw. organische Härter ggfls. in mikroverkapselter Form eingesetzt werden.

12. Verfahren nach Ansprüchen 1 und 7–11, dadurch gekennzeichnet, dass die Härterkomponente mit einem bei über 0 °C, bevorzugt bei Raumtemperatur gasförmigen Treibmittel oder Treibmittelgemisch allein oder in Kombination mit einem bei 0 bis 50 °C, bevorzugt bei Raumtemperatur, unter erhöhtem Druck verflüssigten Treibmittel beaufschlagt ist.

13. Verfahren nach Ansprüchen 1 und 7–12, dadurch gekennzeichnet, dass das gasförmige Treibmittel bzw. Treibmittelgemisch ein Inertgas oder inertes Gasgemisch ist.

14. Verfahren nach Anspruch 1, dadurch gekennzeichnet, dass im Druckbehälter A ein hydrolyse- und alkalibeständiges Treibmittel eingesetzt wird.

15. Verfahren nach Ansprüchen 1 und 14, dadurch gekennzeichnet, dass als Treibmittel Dichlordifluormethan verwendet wird.

16. Verfahren nach Anspruch 1, dadurch gekennzeichnet, dass die zur Schaumerzeugung notwendigen Emulgatoren in Druckbehälter A und/oder Druckbehälter B enthalten sind.

17. Verfahren nach Ansprüchen 1 und 16, dadurch gekennzeichnet, dass als Emulgatoren an sich bekannte nichtionogene, anionaktive, kationaktive und/oder amphotere Tenside eingesetzt werden.

18. Verfahren nach Ansprüchen 1, 16 und 17, dadurch gekennzeichnet, dass der Emulgator im Gemisch mit der Alkalisilikatlösung vorliegt.

19. Verfahren nach Ansprüchen 1, 16 und 17, dadurch gekennzeichnet, dass die Emulgatoren mit der Härterkomponente gemischt eingesetzt werden.

20. Verfahren nach Ansprüchen 1 und 16–19, dadurch gekennzeichnet, dass als Emulgatoren Addukte von Fettalkoholen an Ethylenoxid, bevorzugt Addukte von Oleyl-Cetyl-Alkohol an 2 bis 5 Mol Ethylenoxid, Ammoniumsalze mit einem oder zwei linearen Alkylresten mit 12–17 C-Atomen, bevorzugt Distearyldimethylammoniumchlorid, Lauryltrimethylammoniumchlorid oder Laurylpyridiniumchlorid, sowie Monoester der Sulfobernsteinsäure mit Talgfettsäuremonoethanolamid verwendet werden.

**Claims**

1. A process for the production of in situ foams based on alkali metal silicates, characterized in that an aqueous alkali silicate solution on the one hand and a hardener solution on the other hand are present in separate pressurized containers A and B, the hardener solution in container B is added to the silicate solution in container A by actuation of a valve and mixed therewith and a propellent gas liquid under elevated pressure at 0 to 50 °C is used in combination with a suitable emulsifier to generate foam on actuation of the removal valve.

2. A process as claimed in Claim 1, characterized in that a liquid waterglass solution or a mixture of 50 to 97% by weight and preferably 80 to 95% by weight aqueous alkali silicate solution and 50 to 3% by weight and preferably 5 to 20% by weight liquefied propellent is present in a pressurized container A.

3. A process as claimed in Claims 1 and 2, characterized in that sodium silicate and/or potassium silicate solutions are preferably used as the alkali silicate solution.

4. A process as claimed in Claims 1 to 3, characterized in that the molar ratio of $SiO_2$ to $Na_2O$ in the alkali silicate solution is 2 to 4:1 and preferably 2.5 to 3.5:1 or the molar ratio of $SiO_2$ to $K_2O$ is 2.8 to 4:1 and preferably 3.2 to 3.5:1.

5. A process as claimed in Claims 1 to 4, characterized in that the total solids content of the alkali silicate solution is from 25 to 50% by weight and the solution has a density of from 1.25 to 1.60 g/$cm^3$ and a viscosity of from 10 to 5000 mPa · s and preferably from 50 to 1000 mPa · s at 20 °C.

6. A process as claimed in Claims 1 to 5, characterized in that the alkali silicate solution optionally contains additions of quaternary ammonium compounds, borates and/or synthetic resins and also alkali-compatible organic and/or inorganic compounds to improve the mechanical strength of the foams in dissolved, emulsified and/or dispersed form.

7. A process as claimed in Claim 1, characterized in that the hardener component is present in the pressurized container B under an excess pressure in relation to container A.

8. A process as claimed in CLaims 1 and 7, characterized in that the hardeners used are standard inorganic and/or organic gelating agents.

9. A process as claimed in Claims 1, 7 and 8, characterized in that carboxylic acid esters, particularly glycerol triacetic acid ester, are used as the hardener.

10. A process as claimed in Claims 1, 7 and 8, characterized in that mixtures of carboxylic acid esters, preferably glycerol triacetic acid ester, with oxides or salts of polyvalent cations, preferably Zn, Mg, Ca, are used.

11. A process as claimed in Claims 1 and 7 to 10, characterized in that inorganic or organic hardeners are optionally used in microencapsulated form.

12. A process as claimed in Claims 1 and 7 to 11, characterized in that the hardener component is driven out by a propellent or propellent mixture gaseous above 0 °C and preferably at room temperature either as such or in combination with a propellent liquefied under elevated pressure at 0 to 50 °C and preferably at room temperature.

13. A process as claimed in Claims 1 and 7 to 12, characterized in that the gaseous propellent or propellent mixture is an inert gas or an inert gas mixture.

14. A process as claimed in Claim 1, characterized in that a propellent stable to hydrolysis and alkalis is used in the pressurized container A.

15. A process as claimed in Claims 1 and 14, characterized in that diclorodifluoromethane is used as the propellent.

16. A process as claimed in Claim 1, characterized in that the emulsifiers required for foam generation are present in the pressurized container A and/or the pressurized container B.

17. A process as claimed in Claims 1 and 16, characterized in that non-ionic, anion-active, cation-active and/or amphoteric surfactants known per se are used as emulsifiers.

18. A process as claimed in Claims 1, 16 and 17, characterized in that the emulsifier is present in admixture with the alkali silicate solution.

19. A process as claimed in Claims 1, 16 and 17, characterized in that the emulsifiers are used in admixture with the hardener component.

20. A process as claimed in Claims 1 and 16 to 19, characterized in that the emulsifiers used are adducts of fatty alcohols with ethylene oxide, preferably adducts of oleyl-cetyl alcohol with 2 to 5 moles ethylene oxide, ammonium salts containing one or two linear $C_{12}$–$C_{17}$ alkyl radicals, preferably distearyl dimethyl ammonium chloride, lauryl trimethyl ammonium chloride or lauryl pyridinium chloride, and monoesters of sulfosuccinic acid with tallow fatty acid monoethanolamide.

## Revendications

1. Procédé de production de mousses sur place, à base de silicates de métaux alcalins, caractérisé en ce qu'une solution aqueuse de silicate alcalin d'une part et une solution de durcissant d'autre part se présentent dans des réservoirs à pression A et B distincts, en ce qu'on ajoute la solution de durcissant dans le réservoir B, par actionnement d'une soupape, à la solution de silicate dans le réservoir A et la mélange avec elle, et en ce que, pour la production de mousse avec actionnement de la soupape de décharge, on utilise un gaz propulseur liquide dans l'intervalle de 0 à 50 °C sous haute pression en combinaison aved un émulsifiant approprié.

2. Procédé selon la revendication 1, caractérisé en ce que dans un réservoir à pression A est contenue une solution de verre soluble liquide ou un mélange à 50 à 97% en poids, de préférance à 80 à 95% en poids de solution aqueuse de silicate alcalin et à 50 à 3% en poids, de préférence à 5 à 20% en poids d'agent propulseur liquéfié.

3. Procédé selon les revendications 1 et 2, caractérisé en ce qu'on utilise comme solution de silicate alcalin de préférence des solutions de silicate de sodium et/ou de silicate de potassium.

4. Procédé selon les revendications 1 à 3, caractérisé en ce que dans la solution de silicate alcalin le rapport molaire $SiO_2$/$Na_2O$ est de 2 à 4:1, de préférence de 2,5 à 3,5:1 ou le rapport molaire $SiO_2$/$K_2O$ de 2,8 à 4:1, de préférence de 3,2 à 3,5:1.

5. Procédé selon les revendications 1 à 4, caractérisé en ce que la teneur totale en matière sèche de la solution de silicate alcalin s'élève à 25 à 50% en poids et en ce que la solution à 20 °C présente une densité de 1,25 à 1,60 g/$cm^3$ de même qu'une viscosité de 10 à 5000 mPa · s, de préférence de 50 à 1000 mPa · s.

6. Procédé selon les revendications 1 à 5, caractérisé en ce que la solution de silicate alcalin contient à l'état dissous, émulsifié et/ou dispersé éventuellement des additions de composés d'ammonium quaternaires, des borates et/ou des résines synthétiques de même que des composés organiques et/ou minéraux compatibles avec les alcalis pour l'amélioration de la résistance mécanique des mousses.

7. Procédé selon la revendication 1, caractérisé en ce que le composant durcissant dans le réservoir à pression B est contenu sous une supression par rapport au réservoir A.

8. Procédé selon les revendications 1 et 7, caractérisé en ce qu'on utilise comme durcissant des agents gélifiants usuels, minéraux et/ou organiques.

9. Procédé selon les revendications 1, 7 et 8, caractérisé en ce qu'on utilise comme durcissant de préférence des esters d'acides carboxyliques, en particulier des esters d'acide glycérine-triacétique.

10. Procédé selon les revendications 1, 7 et 8, caractérisé en ce qu'on utilise des mélanges d'esters d'acides carboxyliques, de préférence d'esters d'acide glycérine-triacétique, avec des oxydes ou des sels de cations polyvalents, de préférence de Zn, Mg, Ca.

11. Procédé selon les revendications 1 et 7 à 10, caractérisé en ce qu'on utilise des durcissants minéraux ou organiques éventuellement sous la forme micro-encapsulée.

12. Procédé selon les revendications 1 et 7 à 11, caractérisé en ce que le composant durcissant est alimenté avec un agent propulseur ou mélange d'agents propulseurs gazeux au-dessus de 0 °C, de préférence à la température ordinaire, uniquement ou en combinaison avec un agent propulseur liquéfié sous pression élevée à 0–50 °C, de préférence à la température ordinaire.

13. Procédé selon les revendications 1 et 7 à 12, caractérisé en ce que l'agent propulseur ou mélange d'agents propulseurs gazeux est un gaz inerte ou un mélange de gaz inertes.

14. Procédé selon la revendication 1, caractérisé en ce que dans le réservoir à pression A on utilise un agent propulseur qui résiste à l'hydrolyse et aux alcalis.

15. Procédé selon les revendications 1 et 14, caractérisé en ce qu'on utilise comme agent propulseur du dichlorodifluorométhane.

16. Procédé selon la revendication 1, caractérisé en ce que les émulsifiants nécessaires à la production de la mousse sont contenus dans le réservoir à pression A et/ou dans le réservoir à pression B.

17. Procédé selon les revendications 1 et 16, caractérisé en ce qu'on utilise comme émulsifiants des tensioactifs connus en eux-mêmes non ionogènes, anioactifs, catioactifs et/ou amphotères.

18. Procédé selon les revendications 1, 16 et 17, caractérisé en ce que l'émulsifiant se présente en mélange avec la solution silicate alcalin.

19. Procédé selon les revendications 1, 16 et 17, caractérisé en ce que les émulsifiants sont utilisés en mélange avec le composant durcissant.

20. Procédé selon les revendications 1 et 16 à 19, caractérisé en ce qu'on utilise comme émulsifiants des produits d'addition d'alcools gras sur l'oxyde d'éthylène, de préférence des produits d'addition d'alcool oléyl-cétylique sur 2 à 5 moles d'oxyde d'éthylène, des sels d'ammonium avec un ou deux radicaux alcoyle linéaires ayant 12 à 17 atomes de carbone, de préférence du chlorure de distéaryl-diméthyl-ammonium, du chlorure de lauryl-triméthyl-ammonium ou du chlorure de lauryl-pyridinium, de même que des monoesters d'acide sulfosuccinique avec de la monoéthanolamide d'acide gras de suif.